# EUROPEAN PATENT APPLICATION

(11) **EP 3 242 528 A1**
(43) Date of publication of application: **08.11.2017**
(21) Application number: 15875200.6
(22) Date of filing: 28.12.2015
(51) Int. Cl.: H04W 74/08

(54) **DATA TRANSMISSION METHOD, ACQUISITION METHOD, TRANSMISSION APPARATUS AND ACQUISITION APPARATUS**

(30) Priority: 31.12.2014 CN 201410856631
(71) Applicant: ZTE Corporation, Shenzhen, Guangdong 518057 (CN)
(72) Inventor: LV, Kaiying, Shenzhen Guangdong 518057 (CN); SUN, Bo, Shenzhen Guangdong 518057 (CN); RUI, Hua, Shenzhen Guangdong 518057 (CN); XING, Weimin, Shenzhen Guangdong 518057 (CN); HAN, Zhiqiang, Shenzhen Guangdong 518057 (CN)
(74) Representative: Deambrogi, Edgardo
(86) International application number: PCT/CN2015/099248
(87) International publication number: WO 2016/107524

(57) **Abstract**

At least some embodiments of the disclosure provide a data sending method, acquisition method, sending device and acquisition device. The data sending method includes that: a first Station (STA) encapsulates data required to be sent to a plurality of second STAs in different Protocol Data Units (PDUs) respectively, and PDUs comprise at least one of Media Access Control (MAC) PDUs (MPDUs) and Physical (PHY) PDUs (PPDUs); the first STA aggregates the PDUs encapsulated with the data in at least one radio frame; and the first STA sends the at least one radio frame to the plurality of second STAs. By the embodiments of the disclosure, the problems of stiff channel competition and high overhead during data sending in the related art are solved, and effects of reducing channel competition and reducing the overhead are further achieved.

## Description

### Technical Field

The disclosure relates to the field of communications, and in particular to a data sending method, acquisition method, sending device and acquisition device.

### Background

At present, Wireless Local Area Networks (WLANs) in the field of wireless networks are rapidly developed, and global WLAN coverage requirements increase. An Institute of Electrical and Electronic Engineers (IEEE) 802.11 working group sequentially defines a series of WLAN technical standards such as 802.11 a, 802.11 b, 802.11 g and 802.11 n. And the IEEE 802.11 working group mainly formulates Physical (PHY) and Media Access Control (MAC) specifications. Then, other working groups devoted to develop specifications involving improvement of existing 802.11 technologies appear one after another. For example, a High Efficiency WLAN (HEW) working group mainly makes researches on how to enable a WLAN to implement more efficient transmission of data in a dense network layout scenario.

A basic architecture of a WLAN refers to a Basic Service Set (BSS) formed by Stations (STAs), and the BSS includes an Access Point (AP) STA and multiple non-AP STAs associated with the AP STA. 802.11 define two basic wireless channel access manners: a competition-based access manner, i.e. a Distributed Coordination Function (DCF); and a scheduling-based access manner, i.e. a Point Coordination Function (PCF). In consideration of a Quality of Service (QoS) requirement of a service stream, another two channel access manners are also disclosed on a basis of the two basic access manners: Enhanced Distributed Channel Access (EDCA) and Hybrid Coordination function Controlled channel Access (HCC).

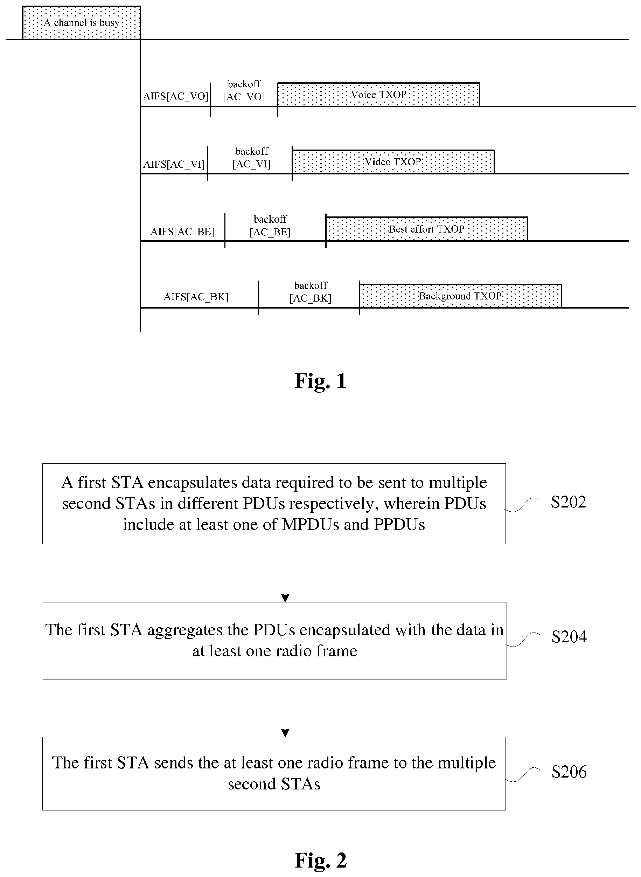

The DCF is a most basic channel access mode, and enables multiple STAs to share at least one wireless channel by virtue of a Carrier Sense Multiple Access with Collision Avoidance (CSMA/CA) mechanism. The EDCA is an enhanced channel access mode based on the CSMA/CA mechanism. Four Access Categories (ACs) are defined in the EDCA, which respectively include an AC Background (AC_BK), an AC Best Effort (AC_BE), an AC Video (AC_VI) and an AC Voice (AC_VO). Each AC defines a set of specific parameters, and these parameters statistically specify priorities of each AC for channel access. A competition channel access process of EDCA is as follows. After a channel enters an idle state, an STA waits for a fixed time length which is called as an Arbitration Inter-Frame Space (AIFS) at first. And then the STA waits for a random backoff time period, and obtains a Transmission Opportunity (TXOP), as shown in Fig. 1. Fig. 1 is a schematic diagram of a completion access mechanism of EDCA according to the related art.

In EDCA and HCCA manners, the STA obtains a TXOP through a channel access process. The TXOP refers to a bounded time period when the STA transmits a specific communication category. And once obtaining the TXOP, the STA continues transmitting at least one data frame, or at least one control frame, or at least one management frame, or receiving at least one response frame according to an AC. An AP transmits data of multiple users in an AC queue in a TXOP. However, data of each user is independently packed in different radio frames, and each frame has PHY frame header overhead, and is sent at least at an interval of a Short Interframe Space (SIFS).

In a typical HEW scenario, STAs are distributed very densely, so that there exists stiff channel competition. TXOPs which are acquired by each STA are consequently reduced, and APs are required to compete with all non-AP STAs to access channels. In a practical deployment scenario, a phenomenon of small data storms frequently occurs. And when an AP has delay-insensitive small data of a large number of STAs to be sent, adoption of a conventional competition access manner for the AP to compete for at least one channel for point-to-point pushing according to a service access priority of an AC_BE is low in efficiency. And a multi-user transmission manner, such as an Orthogonal Frequency Division Multiple Access (OFDMA) manner or a Multi-User Multiple-Input Multiple-Output (MU-MIMO) technology, is for a small number of users and is still not well solve the problems of channel competition and overhead caused by small data sending of massive users.

For the problems of stiff channel competition and high overhead during data sending in the related art, there is yet no effective solution at present.

### Summary

At least some embodiments of disclosure provide a data sending method, an acquisition method, a sending device and an acquisition device, so as at least to solve the problems of stiff channel competition and high overhead during data sending in the related art.

In an embodiment of the disclosure, a data sending method is provided, which includes that: encapsulating, by a first Station (STA), data required to be sent to a plurality of second STAs in different Protocol Data Units (PDUs) respectively, a PDUs include at least one of Media Access Control (MAC) PDUs (MPDUs) and Physical (PHY) PDUs (PPDUs); aggregating, by the first STA, the PDUs encapsulated with the data in at least one radio frame; and sending, by the first STA, the at least one radio frame to the plurality of second STAs.

In one embodiment, before sending, by the first STA, the at least one radio frame to the plurality of second STAs, further including: encapsulating, by the first STA, identification information corresponding to the data and used for identifying the plurality of second STAs in the at least one radio frame.

In one embodiment, the first STA encapsulates the identification information in the at least one radio frame in at least one of the following manners: the first STA encapsulates the identification information in one PDU, and aggregates the PDU encapsulated with the identification information and the PDUs encapsulated with the data in the at least one radio frame; the first STA encapsulates the identification information in at least one PHY signaling of each of the at least one radio frame; and the first STA correspondingly encapsulates the identification information in the PDUs encapsulated with the data respectively.

In one embodiment, the method further includes at least one of the following: encrypting, by the first STA, the PDUs encapsulated with the data through a private key of each of the plurality of second STAs corresponding to the data; and, encrypting, by the first STA, at least one PDU encapsulated with the identification information through a group key.

In one embodiment, the identification information includes at least one of the following information: identifier information of the plurality of second STAs, group identification information of the plurality of second STAs, data existence indication information of the plurality of second STAs, position information of the PDUs of the plurality of second STAs, number information of the PDUs of the plurality of second STAs and address information corresponding to the plurality of second STAs.

In one embodiment, the PDUs encapsulated with the data respectively correspond to the same or different second STAs, and when the PDUs include MPDUs, frame headers of the MPDUs encapsulated with the data include at least one of the following information: address information corresponding to each of the plurality of second STAs; and acknowledgement (ACK) policies corresponding to each of the plurality of the second STAs.

In one embodiment, when the data of the plurality of second STAs is respectively encapsulated in different MPDUs, at least one PHY signaling of each of the at least one radio frame carries at least one of the following information: indication information used for indicating that the at least one radio frame includes the data required to be sent to the plurality of second STAs; and receiving address identifier information used for identifying at least one broadcast address or at least one multicast address.

In one embodiment, when the PDUs include the MPDUs, a frame header of each of the MPDUs encapsulated with the identification information includes at least one of broadcast or multicast receiving address information and an ACK policy corresponding to each of the plurality of the second STAs.

In one embodiment, when the PDUs include the MPDUs, aggregating, by the first STA, the MPDUs encapsulated with the data in the at least one radio frame includes: aggregating, by the first STA, the MPDUs encapsulated with the data in the at least one radio frame through a predetermined format, and the predetermined format includes at least one of: MPDU length information, check information, a first specific spacer and a first filler.

In one embodiment, when the PDUs include the PPDUs, the PPDUs encapsulated with the data respectively correspond to the same or different second STAs, and at least one PHY signaling of each of the PPDUs encapsulated with the data include at least one of the following information: indication information used for indicating that the at least one radio frame includes the data required to be sent to the plurality of second STAs, length information of the PPDUs, identifier information corresponding to the plurality of second STAs, indication information used for indicating whether the PPDUs encapsulated with the data subsequently include other PPDUs or not and at least one PHY transmission parameter, and the at least one PHY transmission parameter at least include: Modulation and Coding Schemes (MCSs).

In one embodiment, when the PDUs include the PPDUs, at least one PHY signaling of each of the PPDUs encapsulated with the identification information includes at least one of the following information: indication information used for indicating that the at least one radio frame includes the data required to be sent to the plurality of second STAs, length information of the PPDUs, broadcast or multicast receiving address identifier information, indication information used for indicating whether the PPDUs encapsulated with the data subsequently include other PPDUs or not and at least one PHY transmission parameter, and the at least one PHY transmission parameter at least includes: an MCS.

In one embodiment, when the PDUs include the PPDUs, aggregating, by the first STA, the PPDUs encapsulated with the data in the at least one radio frame includes at least one of the following: aggregating, by the first STA, the PPDUs encapsulated with the data in the at least one radio frame according to a direct sequence; and, aggregating, by the first STA, the PPDUs encapsulated with the data in the at least one radio frame through a predetermined format, and the predetermined format includes at least one of: a second filler and a second specific spacer.

In one embodiment, sending, by the first STA, the at least one radio frame to the plurality of second STAs includes: acquiring, by the first STA, a Transmission Opportunity (TXOP) used for sending the at least one radio frame; and sending, by the first STA, the at least one radio frame to the plurality of second STAs by virtue of the TXOP.

In one embodiment, acquiring, by the first STA, the TXOP used for sending the radio frame includes: competing, by the first STA, for at least one channel to acquire the TXOP by adopting a channel access parameter of a corresponding priority in an EDCA manner.

In one embodiment, sending, by the first STA, the radio frame to the plurality of second STAs by virtue of the TXOP includes at least one of the following: sending, by the first STA, the at least one radio frame to the plurality of second STAs after at least one specific inter-frame space after at least one system message frame is sent; and, sending, by the first STA, the at least one radio frame to the plurality of second STAs on at least one pre-allocated resource used for sending the at least one radio frame.

In another embodiment of the disclosure, a data acquisition method is provided, which includes that: receiving, by a second Station (STA), at least one radio frame sent by a first STA, and the at least one radio frame includes aggregated Protocol Data Units (PDUs) encapsulated with data, and the PDUs include at least one of Media Access Control (MAC) PDUs (MPDUs) and Physical (PHY) PDUs (PPDUs); determining, by the second STA, whether the at least one radio frame carries data required to be acquired by the second STA or not; and acquiring, by the second STA, the data in the at least one radio frame under the condition that the at least one radio frame carries data required to be acquired by the second STA.

In one embodiment, determining, by the second STA, whether the radio frame carries the data required to be acquired by the second STA or not includes: judging, by the second STA, whether the radio frame carries identification information or address information of the second STA or not according to at least one of the following information: identification information encapsulated in at least one PHY signaling of each of the at least one radio frame and used for identifying STAs corresponding to the data, identification information encapsulated in the PDUs of the at least one radio frame and used for identifying STAs corresponding to the data and address information, included in frame headers of the PDUs encapsulated with the data in the at least one radio frame, of the STAs required to acquire the data; and determining, by the second STA, that the radio frame carries the data required to be acquired by the second STA under the condition that the radio frame carries identification information or address information of the second STA.

In one embodiment, determining, by the second STA, whether the at least one radio frame carries the identification information of the second STA or not according to the identification information encapsulated in the at least one PHY signaling of each of the at least one radio frame and used for identifying the STAs corresponding to the data includes: determining, by the second STA, whether the at least one radio frame carries the identification information of the second STA or not according to at least one of the following information carried in the identification information encapsulated in the at least one PHY signaling of each of the at least one radio frame: identifier information of the second STA, group identification information of the second STA, data existence indication information of the second STA, position information of the data of the second STA, number information of the data of the second STA and address information corresponding to the second STA.

In one embodiment, determining, by the second STA, whether the radio frame carries the identification information of the second STA or not according to the identification information encapsulated in the PDUs of the at least one radio frame and used for identifying the STAs corresponding to the data includes: determining, by the second STA, whether the at least one radio frame carries the identification information of the second STA or not according to at least one of the following information carried in the identification information encapsulated in the PDUs of the at least one radio frame: identifier information of the second STA, group identification information of the second STA, data existence indication information of the second STA, position information of the data of the second STA, number information of the data of the second STA and address information corresponding to the second STA.

In one embodiment, determining, by the second STA, whether the at least one radio frame carries the address information of the second STA or not according to the address information, included in the frame headers of the PDUs encapsulated with the data in the at least one radio frame, of the STAs required to acquire the data includes: sequentially decoding, by the second STA, the PDUs encapsulated with the data in the at least one radio frame; determining, by the second STA, whether the frame headers of the PDUs encapsulated with the data carry the address information of the second STA or not; and determining that the at least one radio frame carries the address information of the second STA under the condition that the frame headers of the PDUs encapsulated with the data carry the address information of the second STA.

In another embodiment of the disclosure, a data sending device is provided, which is applied to a first STA and includes: a first encapsulation component, to encapsulate data required to be sent to a plurality of second STAs in different Protocol Data Units (PDUs) respectively, and PDUs include at least one of Media Access Control (MAC) PDUs (MPDUs) and Physical (PHY) PDUs (PPDUs); a aggregation component, to aggregate the PDUs encapsulated with the data in at least one radio frame; and a sending component, to send the at least one radio frame to the plurality of second STAs.

In one embodiment, the device further includes: a second encapsulation component, to encapsulate identification information corresponding to the data and used for identifying the plurality of second STAs in the at least one radio frame.

In one embodiment, the device further includes at least one of the following manners: a first encryption component, to encrypt the PDUs encapsulated with the data through a private key of each of the plurality of second STAs corresponding to the data; and, a second encryption component, to encrypt at least one PDU encapsulated with the identification information through a group key.

In one embodiment, the sending component includes: an acquisition element, to acquire a Transmission Opportunity (TXOP) used for sending the at least one radio frame; and a sending element, to send the at least one radio frame to the plurality of second STAs by virtue of the TXOP.

In another embodiment of the disclosure, a data acquisition device is provided, which is applied to a second STA and includes: a receiving component, to receive at least one radio frame sent by a first STA, and the at least one radio frame includes aggregated Protocol Data Units (PDUs) encapsulated with data, and the PDUs include at least one of Media Access Control (MAC) PDUs (MPDUs) and Physical (PHY) PDUs (PPDUs); a determination component, to determine whether the at least one radio frame carries data required to be acquired by the second STA or not; and an acquisition component, to acquire the data in the radio frame under the condition that the data in the at least one radio frame under the condition that the at least one radio frame carries data required to be acquired by the second STA.

In one embodiment, the determination component includes: a judgment element, to judge whether the radio frame carries identification information or address information of the second STA or not according to at least one of the following information: identification information encapsulated in at least one PHY signaling of each of the at least one radio frame and used for identifying STAs corresponding to the data, identification information encapsulated in the PDUs of the at least one radio frame and used for identifying STAs corresponding to the data and address information, included in frame headers of the PDUs encapsulated with the data in the at least one radio frame, of the STAs required to acquire the data; and a determination element, to determine that the radio frame carries the data required to be acquired by the second STA under the condition that the radio frame carries identification information or address information of the second STA.

According to at least some embodiments of the disclosure, the first STA encapsulates data required to be sent to a plurality of second STAs in different PDUs respectively, in which PDUs include at least one of MPDUs and PPDUs; the first STA aggregates the PDUs encapsulated with the data in at least one radio frame; and the first STA sends the at least one radio frame to the plurality of second STAs, so that the problems of stiff channel competition and high overhead during data sending in the related technology are solved, and effects of reducing channel competition and reducing the overhead are further achieved.

### Brief Description of the Drawings

The drawings described here are adopted to provide a further understanding to the disclosure, and form a part of the disclosure. Schematic embodiments of the disclosure and descriptions thereof are adopted to explain the disclosure and not intended to form improper limits to the disclosure. In the drawings:
Fig. 1 is a schematic diagram of a competition access mechanism of EDCA according to the related art.
Fig. 2 is a flowchart of a data sending method according to an embodiment of the disclosure.
Fig. 3 is a flowchart of a data acquisition method according to an embodiment of the disclosure.
Fig. 4 is a structural block diagram of a data sending device according to an embodiment of the disclosure.
Fig. 5 is a structural block diagram of a data sending device according to a first exemplary embodiment of the disclosure.
Fig. 6 is a structural block diagram of a data sending device according to a second exemplary embodiment of the disclosure.
Fig. 7 is a structural block diagram of a sending component 46 in a data sending device according to an embodiment of the disclosure.
Fig. 8 is a structural block diagram of a data acquisition device according to an embodiment of the disclosure.
Fig. 9 is a structural block diagram of a judgment component 84 in a data acquisition device according to an embodiment of the disclosure.
Fig. 10 is a schematic diagram of a first radio frame format according to embodiment one of the disclosure.
Fig. 11 is a schematic diagram of a second radio frame format according to embodiment one of the disclosure.
Fig. 12 is a schematic diagram of a third radio frame format according to embodiment one of the disclosure.
Fig. 13 is a schematic diagram of a radio frame format according to embodiment two of the disclosure.
Fig. 14 is a schematic diagram of a radio frame format according to embodiment three of the disclosure.
Fig. 15 is a schematic diagram of a radio frame format according to embodiment four of the disclosure.
Fig. 16 is a schematic diagram of a radio frame format according to embodiment five of the disclosure.
Fig. 17 is a schematic diagram of a radio frame format according to embodiment six of the disclosure.
Fig. 18 is a schematic diagram of a radio frame format according to embodiment seven of the disclosure.
Fig. 19 is a schematic diagram of sending a radio frame according to embodiment eight of the disclosure.
Fig. 20 is a schematic diagram of sending a radio frame according to embodiment nine of the disclosure.
Fig. 21 is a schematic diagram of sending a radio frame according to embodiment ten of the disclosure.

### Detailed Description

The disclosure will be described below in detail with reference to the drawings and embodiments. It is important to note that the embodiments in the disclosure and characteristics in the embodiments may be combined under the condition of no conflicts.

An embodiment provides a data sending method. Fig. 2 is a flowchart of a data sending method according to an embodiment of the disclosure. As shown in Fig. 2, the flow includes the following steps:
At Step S202: a first STA encapsulates data required to be sent to multiple second STAs in different PDUs respectively, and PDUs include at least one of MPDUs and PPDUs.
At Step S204: the first STA aggregates the PDUs encapsulated with the data in at least one radio frame.
Step S206: the first STA sends the at least one radio frame to the multiple second STAs.

By the steps, a method of aggregating the PDUs encapsulated with the data in at least one radio frame is adopted, so that a purpose of sending data to multiple STAs through at least one radio frame is achieved, channel competition is reduced, the problems of stiff channel competition and high overhead during data sending in the related technology are solved. Effects of reducing channel competition and reducing the overhead are further achieved.

Before the first STA sends the at least one radio frame to the multiple second STAs, identification information related to the second STAs is further encapsulated in the at least one radio frame. In an optional embodiment, before the step that the first STA sends the at least one radio frame to the multiple second STAs, the method further includes that: the first STA encapsulates identification information corresponding to the data and used for identifying the plurality of second STAs in the at least one radio frame. Therefore, it is ensured that the multiple second STAs determine whether the at least one radio frame includes data required to be received by the multiple second STAs or not according to the identification information after receiving the at least one radio frame.

When identification data is encapsulated in the radio frame, many encapsulation manners are adopted. In an optional embodiment, the first STA encapsulates the identification information in the at least one radio frame in at least one of the following manners.

Manner One, the first STA encapsulates the identification information in one PDU, and aggregates the PDU encapsulated with the identification information and the PDUs encapsulated with the data in the at least one radio frame.

Manner Two, the first STA encapsulates the identification information in at least one PHY signaling of each of at least one radio frame.

Manner Three, the first STA correspondingly encapsulates the identification information in the PDUs encapsulated with the data respectively.

Before the radio frame is sent to the multiple second STAs, encryption processing is further performed on the PDUs in the at least one radio frame, and the encrypted PDUs are all of the PDUs, and are also part of the PDUs. Moreover, the PDUs subjected to encryption processing are independent encrypted elements. There are many manners for encrypting the PDUs. In an optional embodiment, the PDUs are encrypted in at least one of the following manner.

Manner One, the first STA encrypts the PDUs encapsulated with the data through a private key of each of the plurality of second STAs corresponding to the data.

Manner Two, the first STA encrypts at least one PDU encapsulated with the identification information through a group key.

That is, different encryption manners are adopted for at least one PDU encapsulated with data required to be sent to the multiple second STAs and the at least one PDU encapsulated with the identification information, so that data transmission reliability is ensured.

The identification information includes at least one of the following information: identifier information of the plurality of second STAs, group identification information of the plurality of second STAs, data existence indication information of the the plurality of second STAs, position information of the PDUs of the plurality of second STAs, number information of the PDUs of the plurality of second STAs and address information corresponding to the plurality of second STAs.

The PDUs encapsulated with the data respectively correspond to the same or different second STAs, and when the PDUs include MPDUs, frame headers of the MPDUs encapsulated with the data include at least one of the following information: address information corresponding to each of the plurality of second STAs; and ACK policies corresponding to each of the plurality of the second STAs..

When the data of the plurality of second STAs is respectively encapsulated in different MPDUs, at least one PHY signaling of each of the at least one radio frame carries at least one of the following information: indication information used for indicating that the at least one radio frame includes the data required to be sent to the plurality of second STAs; and receiving address identifier information used for identifying at least one broadcast address or at least one multicast address.

When the PDUs include the MPDUs, a frame header of each of the MPDUs encapsulated with the identification information includes at least one of broadcast or multicast receiving address information and an ACK policy corresponding to each of the plurality of the second STAs.

After data is encapsulated in multiple PDUs, the multiple PDUs are aggregated in at least one radio frame, and various aggregation manners may be adopted. In an optional embodiment, when the PDUs include the MPDUs, the step that the first STA aggregates the MPDUs encapsulated with the data in the at least one radio frame includes that: the first STA aggregates the MPDUs encapsulated with the data in the at least one radio frame through a predetermined format, and the predetermined format includes at least one of: MPDU length information, check information, a first specific spacer and a first filler.

When the PDUs include the PPDUs, the PPDUs encapsulated with the data respectively correspond to the same or different second STAs, and at least one PHY signaling of each of the PPDUs encapsulated with the data include at least one of the following information: indication information used for indicating that the at least one radio frame includes the data required to be sent to the plurality of second STAs, length information of the PPDUs, identifier information corresponding to the plurality of second STAs, indication information used for indicating whether the PPDUs encapsulated with the data subsequently include other PPDUs or not and at least one PHY transmission parameter, and the at least one PHY transmission parameter at least include: MCSs.

When the PDUs include the PPDUs, at least one PHY signaling of each of the PPDUs encapsulated with the identification information includes at least one of the following information: indication information used for indicating that the at least one radio frame includes the data required to be sent to the plurality of second STAs, length information of the PPDUs, broadcast or multicast receiving address identifier information, indication information used for indicating whether the PPDUs encapsulated with the data subsequently include other PPDUs or not and at least one PHY transmission parameter, in which the at least one PHY transmission parameter at least includes: an MCS.

After data is encapsulated in multiple PDUs, the multiple PDUs are aggregated in a radio frame, and various aggregation manners may be adopted. In an optional embodiment, when the PDUs include the PPDUs, the step that the first STA aggregates the PPDUs encapsulated with the data in the at least one radio frame includes at least one of the following: aggregating, by the first STA, the PPDUs encapsulated with the data in the at least one radio frame according to a direct sequence; and, aggregating, by the first STA, the PPDUs encapsulated with the data in the at least one radio frame through a predetermined format, and the predetermined format includes at least one of: a second filler and a second specific spacer.

Before the first STA sends the at least one radio frame to the multiple second STAs, a TXOP is acquired at first. In an optional embodiment, the step that the first STA sends the at least one radio frame to the multiple second STAs includes that: the first STA acquires the TXOP used for sending the at least one radio frame; and the first STA sends the at least one radio frame to the multiple second STAs by virtue of the TXOP.

There are many manners for the first STA to acquire the TXOP. In an optional embodiment, the step that the first STA acquires the TXOP used for sending the radio frame includes that: the first STA competes for at least one channel to acquire the TXOP by adopting a channel access parameter of a corresponding priority in an EDCA manner.

After the TXOP is acquired, the first STA sends the at least one radio frame to the multiple second STAs by virtue of the TXOP. In an optional embodiment, the step that the first STA sends the at least one radio frame to the multiple second STAs by virtue of the TXOP includes that: the first STA sends the at least one radio frame to the plurality of second STAs after at least one specific inter-frame space after at least one system message frame is sent; and, the first STA sends the at least one radio frame to the plurality of second STAs on at least one pre-allocated resource used for sending the at least one radio frame.

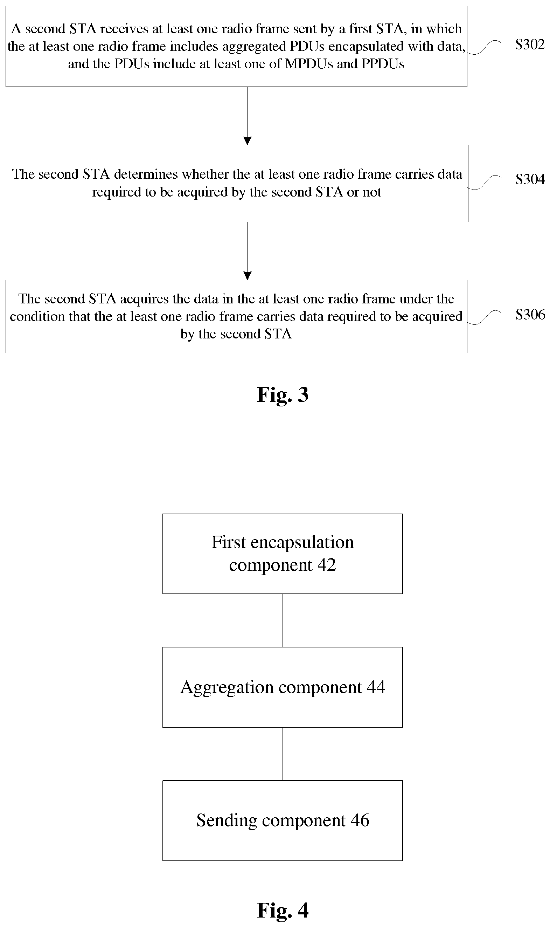

Another embodiment also provides a data acquisition method. Fig. 3 is a flowchart of a data acquisition method according to an embodiment of the disclosure. As shown in Fig. 3, the flow includes the following steps:
At Step S302: a second STA receives at least one radio frame sent by a first STA, in which the at least one radio frame includes aggregated PDUs encapsulated with data, and the PDUs include at least one of MPDUs and PPDUs.
At Step S304: the second STA determines whether the at least one radio frame carries data required to be acquired by the second STA or not.
At Step S306: the second STA acquires the data in the at least one radio frame under the condition that the at least one radio frame carries data required to be acquired by the second STA.

By the steps, the data is acquired by adopting a method of receiving the at least one radio frame containing the data, and moreover, the PDUs encapsulated with the data are aggregated in the at least one radio frame, so that a purpose that multiple second STAs acquire required data by receiving the same radio frame are achieved, channel competition is reduced. The problems of stiff channel competition and high overhead during data sending in the related art are effectively solved. Effects of reducing channel competition and reducing the overhead are further achieved.

When the second STA determines whether the at least one radio frame carries the data required to be acquired by the second STA or not, many judgment manners may be adopted. In an optional embodiment, determination is made at least in the following manner: the second STA judges whether the radio frame carries identification information or address information of the second STA or not according to at least one of the following information: identification information encapsulated in at least one PHY signaling of each of the at least one radio frame and used for identifying STAs corresponding to the data, identification information encapsulated in the PDUs of the at least one radio frame and used for identifying STAs corresponding to the data and address information, included in frame headers of the PDUs encapsulated with the data in the at least one radio frame, of the STAs required to acquire the data; and the second STA determines that the radio frame carries the data required to be acquired by the second STA under the condition that the radio frame carries identification information or address information of the second STA.

In an optional embodiment, the step that the second STA determines whether the at least one radio frame carries the identification information of the second STA or not according to the identification information encapsulated in the at least one PHY signaling of each of the at least one radio frame and used for identifying the STAs corresponding to the data includes that: the second STA determines whether the at least one radio frame carries the identification information of the second STA or not according to at least one of the following information carried in the identification information encapsulated in the at least one PHY signaling of each of the at least one radio frame: identifier information of the second STA, group identification information of the second STA, data existence indication information of the second STA, position information of the data of the second STA, number information of the data of the second STA and address information corresponding to the second STA.

In an optional embodiment, the step that the second STA determines whether the radio frame carries the identification information of the second STA or not according to the identification information encapsulated in the PDUs of the at least one radio frame and used for identifying the STAs corresponding to the data includes that: the second STA determines whether the at least one radio frame carries the identification information of the second STA or not according to at least one of the following information carried in the identification information encapsulated in the PDUs of the at least one radio frame: identifier information of the second STA, group identification information of the second STA, data existence indication information of the second STA, position information of the data of the second STA, number information of the data of the second STA and address information corresponding to the second STA.

In an optional embodiment, the step that the second STA determines whether the at least one radio frame carries the address information of the second STA or not according to the address information, included in the frame headers of the PDUs encapsulated with the data in the at least one radio frame, of the STAs required to acquire the data may include that: the second STA sequentially decodes the PDUs encapsulated with the data in the at least one radio frame; the second STA determines whether the frame headers of the PDUs encapsulated with the data carry the address information of the second STA or not; and the second STA determines the at least one radio frame carries the address information of the second STA under the condition that the frame headers of the PDUs encapsulated with the data carry the address information of the second STA.

Another embodiment further provides a data sending device. The device is arranged to implement the abovementioned embodiments and exemplary implementation modes, and what has been described will not be elaborated. For example, term "component", used below, is a combination of at least one of software and hardware capable of realizing a preset function. Although the device described in the following embodiment is implemented with software, implementation with hardware or a combination of the software and the hardware is also possible and conceivable.

Fig. 4 is a structural block diagram of a data sending device according to an embodiment of the disclosure. The data sending device is applied to a first STA. As shown in Fig. 4, the device includes a first encapsulation component 42, a aggregation component 44 and a sending component 46. The device will be described below.

The first encapsulation component 42 is arranged to encapsulate data required to be sent to multiple second STAs in different PDUs respectively, in which the PDUs include at least one of MPDUs and PPDUs. The aggregation component 44 is connected with the first encapsulation component 42, and is arranged to aggregate the PDUs encapsulated with the data in at least one radio frame. The sending component 46 is connected with the aggregation component 44, and is arranged to send the at least one radio frame to the multiple second STAs.

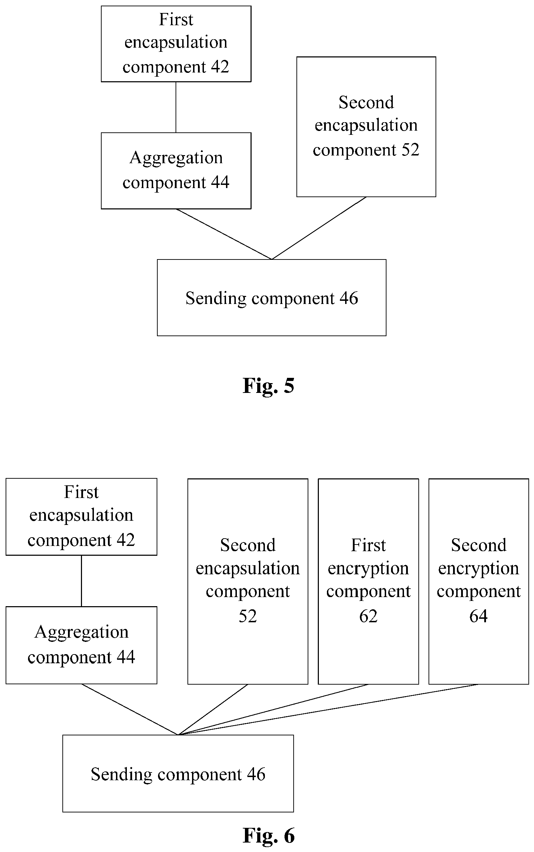

Fig. 5 is a structural block diagram of a data sending device according to a first exemplary embodiment of the disclosure. As shown in Fig. 5, the device further includes, besides all the components shown in Fig. 4, a second encapsulation component 52. The device will be described below.

The second encapsulation component 52 is connected with the sending component 46, and is arranged to encapsulate identification information corresponding to the data and used for identifying the multiple second STAs in the at least one radio frame.

Fig. 6 is a structural block diagram of a data sending device according to a second exemplary embodiment of the disclosure. As shown in Fig. 6, the device further includes at least one of, besides all the components shown in Fig. 5, a first encryption component 62 and a second encryption component 64. The device will be described below.

The first encryption component 62 is connected with the sending component 46, and is arranged to encrypt the PDUs encapsulated with the data through a private key of each of the plurality of second STAs corresponding to the data; and
the second encryption component 64 is connected with the sending component 46, and is arranged to encrypt at least one PDU encapsulated with the identification information through a group key.

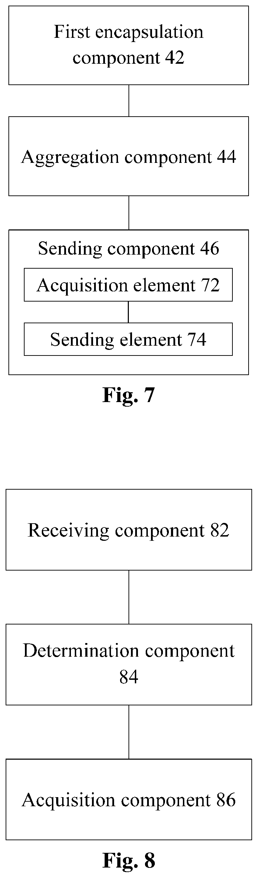

Fig. 7 is a structural block diagram of a sending component 46 in a data sending device according to an embodiment of the disclosure. As shown in Fig. 7, the sending component 46 includes an acquisition element 72 and a sending element 74. The sending component 46 will be described below.

The acquisition element 72 is arranged to acquire a TXOP used for sending the at least one radio frame; and the sending element 74 is connected with the acquisition element 72, and is arranged to send the at least one radio frame to the multiple second STAs by virtue of the TXOP.

Fig. 8 is a structural block diagram of a data acquisition device according to an embodiment of the disclosure. The device is applied to a second STA. As shown in Fig. 8, the device includes a receiving component 82, a determination component 84 and an acquisition component 86. The device will be described below.

The receiving component 82 is arranged to receive at least one radio frame sent by a first STA, in which the at least one radio frame includes aggregated PDUs encapsulated with data, and the PDUs include at least one of MPDUs and PPDUs. The determination component 84 is connected with the receiving component 82, and is arranged to determine whether the at least one radio frame carries data required to be acquired by a second STA or not. The acquisition component 86 is connected with the determination component 84, and is arranged to acquire the data in the radio frame under the condition that a judgment result of the at least one radio frame carries data required to be acquired by the second STA.

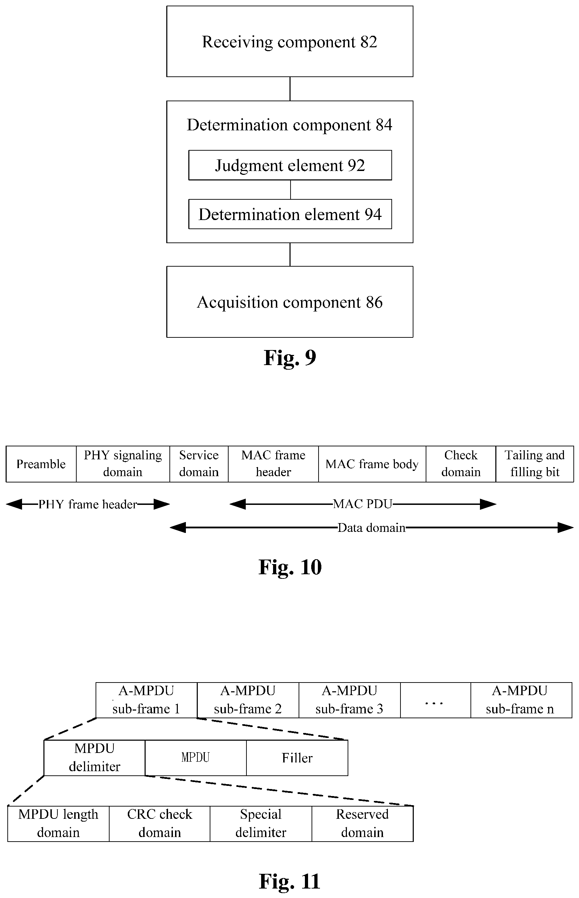

Fig. 9 is a structural block diagram of a determination component 84 in a data acquisition device according to an embodiment of the disclosure. As shown in Fig. 9, the determination component 84 includes a judgment element 92 and a determination element 94. The determination component 84 will be described below.

The judgment element 92 is arranged to judge whether the at least one radio frame carries identification information or address information of the second STA or not according to at least one of the following information: identification information encapsulated in at least one PHY signaling of each of the at least one radio frame and used for identifying STAs corresponding to the data, identification information encapsulated in the PDUs of the at least one radio frame and used for identifying STAs corresponding to the data and address information, included in frame headers of the PDUs encapsulated with the data in the at least one radio frame, of the STAs required to acquire the data; and the determination element 94 is connected with the determination element 92, and is arranged to determine that the radio frame carries the data required to be acquired by the second STA under the condition that the radio frame carries identification information or address information of the second STA.

The disclosure will be described below with reference to specific embodiments.

### Embodiment One

In a wireless communication system in a dense scenario, there is an AP (equivalent to the abovementioned first STA) and STA1, STA2...STAn (equivalent to the abovementioned multiple second STAs).

Fig. 10 is a schematic diagram of a first radio frame format according to embodiment one of the disclosure. As shown in Fig. 10, the AP caches small data packets of a large number of STAs. The AP encapsulates small data packets of multiple STAs in a MAC PDU, i.e. an MPDU, according to an MPDU format respectively. Each MPDU includes a MAC frame header and a MAC frame body. The MAC frame header includes address information of the corresponding STA. Each MAC frame body is encrypted through a private key of the corresponding STA. The AP aggregates the MPDUs of the multiple STAs in an Aggregate MPDU (A-MPDU) to form a data domain of a radio frame according to a specific MAC frame aggregation format, i.e. an A-MPDU format. A specially defined spacer is added in front of each MPDU, including MPDU length information, Cyclic Redundancy Check (CRC) information and a specific delimiter, as shown in Fig. 11. Fig. 11 is a schematic diagram of a second radio frame format according to embodiment one of the disclosure. The AP includes receiving address information of a broadcast or multicast type in at least one PHY signaling in front of the data domain, such as a Partial Associated Identifier (PAID) of a broadcast or multicast MAC address, to indicate that the radio frame is a broadcast or multicast radio frame.

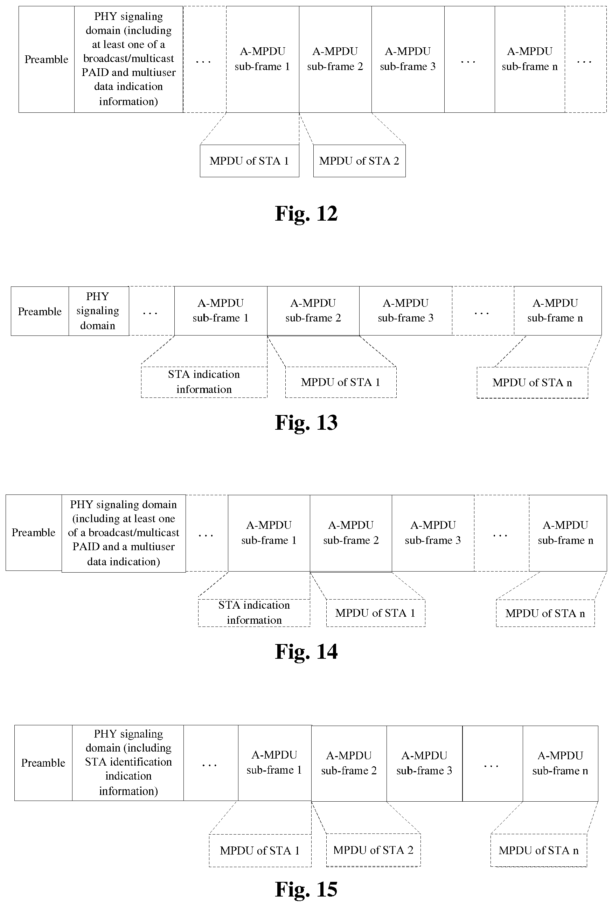

The AP also carries user data indication information of the multiple STAs in the radio frame in the at least one PHY signaling in front of the data domain to indicate the STAs that the radio frame contains the MPDUs of the multiple STAs, as shown in Fig. 12. Fig. 12 is a schematic diagram of a third radio frame format according to embodiment one of the disclosure.

The AP further indicates an ACK policy of the corresponding STA in the frame header of the MPDU of each STA, such as NO ACK, ACK and delayed ACK.

When determining that address information of a receiving STA is matched with the broadcast or multicast address according to the PAID in the signaling domain after receiving the radio frame, the receiving STA continuously decodes the MPDUs in the radio frame. And when decoding a receiving address of a certain MPDU to be an MAC address of the receiving STA, the receiving STA receives the MPDU. Or, when learning about that the radio frame includes multiple pieces of user data according to the user data indication information of the multiple STAs in the signaling domain, the receiving STA continuously decodes the MPDUs in the radio frame, and when decoding a receiving address of a certain MPDU to be the MAC address of the receiving STA, the receiving STA receives the MPDU. A feedback is given in a corresponding manner according to the ACK policy in the frame header of own received MPDU.

### Embodiment Two

In a wireless communication system in a dense scenario, there is an AP and STA1, STA2...STAn.

The AP caches small data packets of a large number of STAs. The AP encapsulates small data packets of multiple STAs in an MPDU according to an MPDU format respectively. Each MPDU includes a MAC frame header and a MAC frame body. The MAC frame header includes address information of the corresponding STA. Each MAC frame body is encrypted through a private key of the corresponding STA. The AP aggregates each MPDU of the MPDUs of the multiple STAs in an A-MPDU to form a data domain of a radio frame according to a specific MAC frame aggregation format, i.e. an A-MPDU format. A specially defined spacer is added in front of each MPDU, including MPDU length information, CRC information and a specific delimiter.

The AP encapsulates indication information, which is an address list, or a group range, or STA bitmap information, STA data existence indication information, STA data position indication information, STA data number indication information and the like, of the STAs in an MPDU, and encrypts a MAC frame body of the MPDU through a group key. A receiving address of the MPDU is a broadcast or multicast MAC address, and each MPDU of the MPDU and the MPDUs of the multiple STAs are aggregated in an A-MPDU to form a data domain of the radio frame according to a specific MAC frame aggregation format, i.e. the A-MPDU format. A first MPDU in the A-MPDU is the MPDU which bears STA indication information. The AP adds at least one PHY signaling and preamble information in front of the A-MPDU to form the radio frame for sending, as shown in Fig. 13. Fig. 13 is a schematic diagram of a radio frame format according to embodiment two of the disclosure.

The AP also indicates an ACK policy of the corresponding STA in the frame header of the MPDU of each STA, such as NO ACK, ACK and delayed ACK. The AP contains an ACK policy to be NO ACK in a frame header of the MPDU which bears the STA indication information.

After receiving the radio frame, a receiving STA decodes the first MPDU in the A-MPDU of the data domain to obtain address information, determines whether the A-MPDU includes the MPDU of the receiving STA or not. When the A-MPDU includes the MPDU of the receiving STA, the receiving STA obtains the MPDU of which a receiving address is an address of the receiving STA according to a position of the specific MPDU indicated by the address information or by blind detection, and receives the MPDU. A feedback is given in a corresponding manner according to the ACK policy in the frame header of own received MPDU.

### Embodiment Three

In combination with embodiments one and two, an AP bears STA indication information in a first MPDU in an A-MPDU and aggregates an MPDU of each STA thereafter to form a data domain of a radio frame. The AP carries at least one of broadcast or multicast type receiving address information in at least one PHY signaling in front of the data domain and user data indication information of multiple STAs. The AP sends the radio frame. As shown in Fig. 14, Fig. 14 is a schematic diagram of a radio frame format according to embodiment three of the disclosure.

After receiving the radio frame, a receiving STA obtains the STA indication information if successfully decoding the first MPDU in the A-MPDU of the data domain and determines whether the A-MPDU includes an MPDU of the receiving STA or not. When the A-MPDU includes the MPDU of the receiving STA, the receiving STA obtains the MPDU of which a receiving address is an address of the receiving STA according to a position of the specific MPDU indicated by the STA indication information or by blind detection, and receives the MPDU. If the first MPDU is failed to be decoded, the receiving STA determines that the radio frame probably includes data of the receiving STA according to at least one of the broadcast or multicast type receiving address information and the contained user data indication information of the multiple STAs. The receiving STA continuously decodes the MPDUs in the radio frame. When decoding a receiving address of a certain MPDU to be an MAC address of the receiving STA, the receiving STA receives the MPDU. A feedback is given in a corresponding manner according to an ACK policy in a frame header of own received MPDU.

### Embodiment Four

In a wireless communication system in a dense scenario, there is an AP and STA1, STA2...STAn.

The AP caches small data packets of a large number of STAs. The AP encapsulates small data packets of multiple STAs in an MPDU according to an MPDU format respectively. Each MPDU includes a MAC frame header and a MAC frame body. The MAC frame header includes address information of the corresponding STA. Each MAC frame body is encrypted through a private key of the corresponding STA. The AP aggregates the MPDUs of the multiple STAs in an A-MPDU to form a data domain of a radio frame according to a specific MAC frame aggregation format, i.e. an A-MPDU format. A specially defined spacer is added in front of each MPDU, including MPDU length information, CRC information and a specific delimiter.

The AP also indicates an ACK policy of the corresponding STA in the frame header of the MPDU of each STA, such as NO ACK, ACK and delayed ACK. The AP includes STA indication information, i.e. a PAID of each receiving STA, or an STA AID range, or bitmap indication information, STA data existence indication information, STA data position indication information, STA data number indication information and the like in at least one PHY signaling in front of the data domain to indicate specific STA data included in the radio frame. As shown in Fig. 15, Fig. 15 is a schematic diagram of a radio frame format according to embodiment four of the disclosure.

After receiving the radio frame, a receiving STA determines whether the data domain of the radio frame includes an MPDU of the receiving STA or not according to the STA indication information in the signaling domain. When the data domain of the radio frame includes the MPDU of the receiving STA, the receiving STA receives the MPDU matched with an MAC address of the receiving STA according to a position of the specific MPDU indicated by the STA indication information. A feedback is given in a corresponding manner according to the ACK policy in the frame header of a received MPDU of the receiving STA.

### Embodiment Five

In a wireless communication system in a dense scenario, there is an AP and STA1, STA2...STAn.

The AP caches small data packets of a large number of STAs. The AP encapsulates small data packets of multiple STAs in a PHY PDU, i.e. a PPDU, according to a PPDU format respectively. A MAC frame body of each PPDU is encrypted through a private key of the corresponding STA. The AP aggregates the PPDUs of the multiple STAs in a radio frame, and the radio frame includes PHY preamble information and the PPDU of each STA, i.e. an Aggregate PPDU (A-PPDU) sub-frame. Each PPDU may be directly linked or linked through at least one of fillers and special spacers. When the PPDUs are directly linked, the PPDUs are directly linked without any filler, spacer and the like. Each PPDU at least includes at least one PHY signaling and/or an MPDU. The at least one PHY signaling includes at least one of the following information:
indication information of data of the multiple STAs, for indicating that the radio frame includes the PPDUs of the multiple STAs;
PPDU length information;
identifier information of the STA to which the data born by the PPDU belongs, such as a PAID;
indication information indicating that there are subsequently other PPDUs; and
a PHY transmission parameter, such as an MCS, for indicating the MCS of the PPDU.

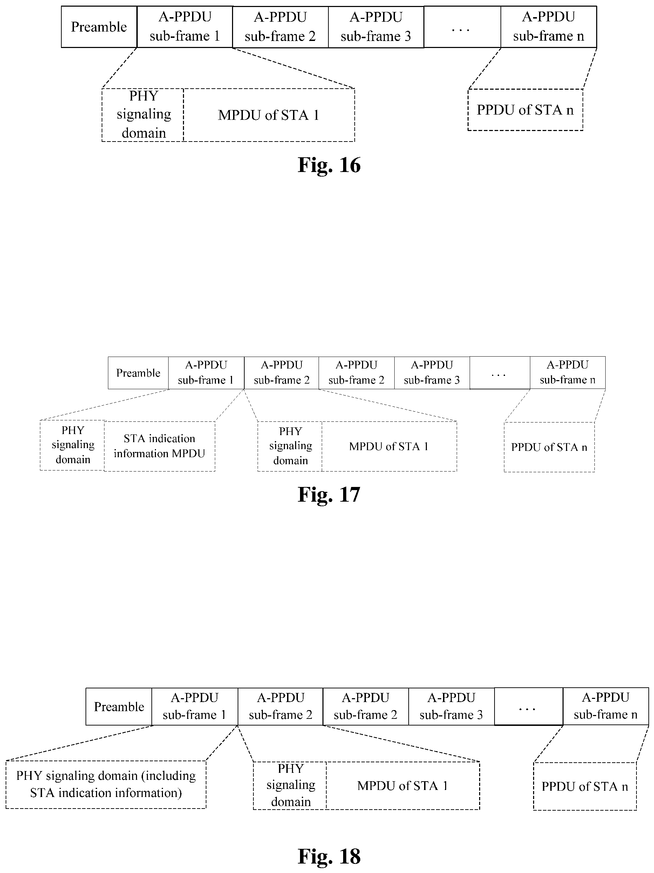

As shown in Fig. 16, Fig. 16 is a schematic diagram of a radio frame format according to embodiment five of the disclosure. In Fig. 16, a schematic diagram of direct linking between the PPDUs is shown.

The AP also indicates an ACK policy of the corresponding STA in a MAC frame header of the PPDU of each STA, such as NO ACK, ACK and delayed ACK.

After receiving the radio frame, a receiving STA performs channel estimation according to the preamble information, decodes each PPDU, determines whether a certain PPDU is a PPDU of the receiving STA or not according to at least one of the STA identifier information PAID in the at least one PHY signaling of the PPDU and receiving address information in the MAC frame header of the PPDU. When the certain PPDU is the PPDU of the receiving STA, the receiving STA receives the PPDU. A feedback is given in a corresponding manner according to the ACK policy in the MAC frame header of the received PPDU.

### Embodiment Six

In a wireless communication system in a dense scenario, there is an AP and STA1, STA2...STAn.

The AP caches small data packets of a large number of STAs. The AP encapsulates small data packets of multiple STAs in a PHY PDU, i.e. a PPDU, according to a PPDU format respectively. Each PPDU at least includes at least one PHY signaling and/or an MPDU. A MAC load of each PPDU includes a MAC frame header and a MAC frame body. Each MAC frame body is encrypted through a private key of the corresponding STA. A receiving address in the MAC frame header of each PPDU is a MAC address of the corresponding STA, each MAC frame header also indicates an ACK policy of the corresponding STA, and each MAC frame body contains data information of the corresponding STA. The at least one PHY signaling of each PPDU includes at least one of the following information:
indication information of data of the multiple STAs, for indicating that the radio frame includes the PPDUs of the multiple STAs;
PPDU length information;
identifier information of the STA to which the data born by the PPDU belongs, such as a PAID;
indication information indicating that there are subsequently other PPDUs; and
a PHY transmission parameter, such as an MCS, for indicating the MCS of the PPDU.

The AP encapsulates STA indication information, which is an address list, or a group range, or STA bitmap information, STA data existence indication information, STA data position indication information, STA data number indication information and the like, in a PPDU, and encrypts a MAC frame body of the PPDU through a group key. A receiving address in a MAC frame header of the PPDU is a broadcast or multicast MAC address, the MAC frame header may also indicate an ACK policy of the corresponding STAs to be NO ACK. And the MAC frame body carries the STA indication information. The PPDU includes at least one of at least one PHY signaling and a MAC load. The at least one PHY signaling of the PPDU includes at least one of the following information:
the indication information of the data of the multiple STAs, for indicating that the radio frame includes the PPDUs of the multiple STAs;
PPDU length information;
broadcast or multicast identifier information, such as a PAID;
indication information indicating that there are subsequently other PPDUs; and
a PHY transmission parameter, such as an MCS, for indicating the MCS of the PPDU.

The AP links the PPDU which bears the STA indication information and the PPDUs of the multiple STAs together and adds PHY preamble information in front to form a radio frame. Each PPDU may be directly linked or linked through fillers and/or special spacers. As shown in Fig. 17, Fig. 17 is a schematic diagram of a radio frame format according to embodiment six of the disclosure.

After receiving the radio frame, a receiving STA performs channel estimation according to the preamble information, decodes the PPDU which bears the STA indication information at first to acquire the STA indication information, i.e. group information, PPDU position information of the receiving STA and the like. And then the receiving STA decodes the PPDUs at subsequent corresponding positions, determines whether a certain PPDU is a PPDU of the receiving STA or not according to at least one of the STA identifier information PAID in the at least one PHY signaling of the PPDU and receiving address information in the MAC frame header of the PPDU. When the certain PPDU is the PPDU of the receiving STA, the receiving STA receives the PPDU. A feedback is given in a corresponding manner according to the ACK policy in the MAC frame header of the received PPDU.

### Embodiment Seven

Similar to embodiment six, an AP may encapsulate STA indication information in a PPDU. The PPDU includes at least one PHY signaling, as shown in Fig. 18. Fig. 18 is a schematic diagram of a radio frame format according to embodiment six of the disclosure. The at least one PHY signaling includes at least one of the following information:
at least one of an address list, a group range, STA bitmap information, STA data existence indication information, STA data position indication information, STA data number indication information and the like;
indication information of data of multiple STAs, for indicating that a radio frame includes PPDUs of the multiple STAs;
broadcast or multicast identifier information, such as a PAID;
more PPDU indication information, indicating that there are subsequently other PPDUs; and
a PHY transmission parameter, such as an MCS, for indicating the MCS of the PPDU.

### Embodiment Eight

In a wireless communication system in a dense scenario, there is an AP and STA1, STA2...STAn.

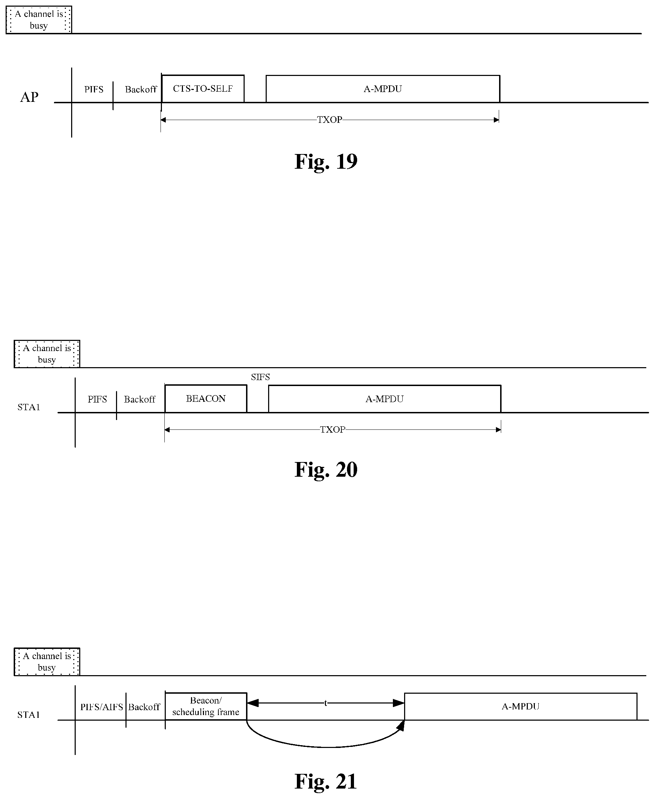

The AP competes to access a channel through an EDCA mechanism. The AP delays for an AIFS at first after detecting media idleness, then delays for a random backoff time period, and successfully acquires a TXOP. And the AP sends a radio frame in the abovementioned embodiments. Before sending the radio frame, the AP also sends a channel reservation frame at first, such as CTS-TO-SELF. As shown in Fig. 19, Fig. 19 is a schematic diagram of sending a radio frame according to embodiment eigth of the disclosure.

### Embodiment Nine

In a wireless communication system in a dense scenario, there is an AP and STA1, STA2...STAn.

The AP competes to access a channel through an EDCA mechanism. The AP delays for an AIFS at first after detecting media idleness, then delays for a random backoff time period, and successfully acquires a TXOP. The AP sends a system message beacon frame, and sends a radio frame in the abovementioned embodiments after an SIFS after the beacon frame. As shown in Fig. 20, Fig. 20 is a schematic diagram of sending a radio frame according to embodiment nine of the disclosure.

In the embodiment, the AP also sends another downlink data frame in the TXOP, and sends the radio frame after the SIFS. Or the AP sends a resource scheduling indication frame in the TXOP at first to reserve a competition-free time window, and the AP sends the radio frame in the competition-free time window.

### Embodiment Ten

In a wireless communication system in a dense scenario, there is an AP and STA1, STA2...STAn.

The AP competes to access a channel through an EDCA mechanism. The AP delays for an AIFS at first after detecting media idleness, then delays for a random backoff time period, and successfully acquires a TXOP. The AP sends a scheduling frame, and indicates that a radio frame in the abovementioned embodiments is sent t time after the frame is ended in the scheduling frame. As shown in Fig. 21, Fig. 21 is a schematic diagram of sending a radio frame according to embodiment ten of the disclosure.

Obviously, those skilled in the art should know that each component or each step of the disclosure is implemented by a universal computing device, and the components or steps are concentrated on a single computing device or distributed on a network formed by a plurality of computing devices, and are optionally implemented by program codes executable for the computing devices, so that the components or steps are stored in a storage device for execution with the computing devices. The shown or described steps are executed in sequences different from those described here in some circumstances, or form each integrated circuit component respectively, or multiple components or steps therein may form a single integrated circuit component for implementation. As a consequence, the disclosure is not limited to any specific hardware and software combination.

The above are the exemplary embodiments of the disclosure and not intended to limit the disclosure. For those skilled in the art, the disclosure may have various modifications and variations. Any modifications, equivalent replacements, improvements and the like made within the scope of the disclosure as defined in the appended claims shall fall within the scope of protection of the disclosure.

### Industrial Applicability

As mentioned above, the data sending method, acquisition method, sending device and acquisition device provided by the at least some embodiments of the disclosure have the following beneficial effects: the problems of stiff channel competition and high overhead during data sending in the related art are solved, and effects of reducing channel competition and reducing the overhead are further achieved.

## Claims

1. A data sending method, comprising:
encapsulating, by a first Station (STA), data required to be sent to a plurality of second STAs in different Protocol Data Units (PDUs) respectively, wherein PDUs comprise at least one of Media Access Control (MAC) PDUs (MPDUs) and Physical (PHY) PDUs (PPDUs);
aggregating, by the first STA, the PDUs encapsulated with the data in at least one radio frame; and
sending, by the first STA, the at least one radio frame to the plurality of second STAs.

2. The method as claimed in claim 1, wherein before sending, by the first STA, the at least one radio frame to the plurality of second STAs, further comprising:
encapsulating, by the first STA, identification information corresponding to the data and used for identifying the plurality of second STAs in the at least one radio frame.

3. The method as claimed in claim 2, wherein the first STA encapsulates the identification information in the at least one radio frame in at least one of the following manners:
the first STA encapsulates the identification information in one PDU, and aggregates the PDU encapsulated with the identification information and the PDUs encapsulated with the data in the at least one radio frame;
the first STA encapsulates the identification information in at least one PHY signaling of each of the at least one radio frame; and
the first STA correspondingly encapsulates the identification information in the PDUs encapsulated with the data respectively.

4. The method as claimed in claim 3, wherein further comprising at least one of the following:
encrypting, by the first STA, the PDUs encapsulated with the data through a private key of each of the plurality of second STAs corresponding to the data; and,
encrypting, by the first STA, at least one PDU encapsulated with the identification information through a group key.

5. The method as claimed in claim 2, wherein the identification information comprises at least one of the following information:
identifier information of the plurality of second STAs, group identification information of the plurality of second STAs, data existence indication information of the plurality of second STAs, position information of the PDUs of the plurality of second STAs, number information of the PDUs of the plurality of second STAs and address information corresponding to the plurality of second STAs.

6. The method as claimed in claim 1, wherein the PDUs encapsulated with the data respectively correspond to the same or different second STAs, and when the PDUs comprise MPDUs, frame headers of the MPDUs encapsulated with the data comprise at least one of the following information:
address information corresponding to each of the plurality of second STAs; and
acknowledgement (ACK) policies corresponding to each of the plurality of the second STAs.

7. The method as claimed in claim 1, wherein, when the data of the plurality of second STAs is respectively encapsulated in different MPDUs, at least one PHY signaling of each of the at least one radio frame carries at least one of the following information:
indication information used for indicating that the at least one radio frame comprises the data required to be sent to the plurality of second STAs; and
receiving address identifier information used for identifying at least one broadcast address or at least one multicast address.

8. The method as claimed in claim 1, wherein, when the PDUs comprise the MPDUs, a frame header of each of the MPDUs encapsulated with the identification information comprises at least one of broadcast or multicast receiving address information and an ACK policy corresponding to each of the plurality of the second STAs.

9. The method as claimed in claim 1, wherein, when the PDUs comprise the MPDUs, concatenating, by the first STA, the MPDUs encapsulated with the data in the at least one radio frame comprises:
concatenating, by the first STA, the MPDUs encapsulated with the data in the at least one radio frame through a predetermined format, wherein the predetermined format comprises at least one of: MPDU length information, check information, a first specific spacer and a first filler.

10. The method as claimed in claim 1, wherein, when the PDUs comprise the PPDUs, the PPDUs encapsulated with the data respectively correspond to the same or different second STAs, and a PHY signaling domain of each of the PPDUs encapsulated with the data comprise at least one of the following information:
indication information used for indicating that the at least one radio frame comprises the data required to be sent to the plurality of second STAs,
length information of the PPDUs,
identifier information corresponding to the plurality of second STAs,
indication information used for indicating whether the PPDUs encapsulated with the data subsequently comprise other PPDUs or not and
at least one PHY transmission parameter, wherein the at least one PHY transmission parameter at least comprise: Modulation and Coding Schemes (MCSs).

11. The method as claimed in claim 3, wherein, when the PDUs comprise the PPDUs, at least one PHY signaling of each of the PPDUs encapsulated with the identification information comprises at least one of the following information:
indication information used for indicating that the at least one radio frame comprises the data required to be sent to the plurality of second STAs,
length information of the PPDUs,
broadcast or multicast receiving address identifier information,
indication information used for indicating whether the PPDUs encapsulated with the data subsequently comprise other PPDUs or not and
at least one PHY transmission parameter, wherein the at least one PHY transmission parameter at least comprises: an MCS.

12. The method as claimed in claim 1, wherein, when the PDUs comprise the PPDUs, concatenating, by the first STA, the PPDUs encapsulated with the data in the at least one radio frame comprises at least one of the following:
concatenating, by the first STA, the PPDUs encapsulated with the data in the at least one radio frame according to a direct sequence; and,
concatenating, by the first STA, the PPDUs encapsulated with the data in the at least one radio frame through a predetermined format, wherein the predetermined format comprises at least one of: a second filler and a second specific spacer.

13. The method as claimed in claim 1, wherein sending, by the first STA, the at least one radio frame to the plurality of second STAs comprises:
acquiring, by the first STA, a Transmission Opportunity (TXOP) used for sending the at least one radio frame; and
sending, by the first STA, the at least one radio frame to the plurality of second STAs by virtue of the TXOP.

14. The method as claimed in claim 13, wherein acquiring, by the first STA, the TXOP used for sending the radio frame comprises:
competing, by the first STA, for at least one channel to acquire the TXOP by adopting a channel access parameter of a corresponding priority in an EDCA manner.

15. The method as claimed in claim 13, wherein sending, by the first STA, the radio frame to the plurality of second STAs by virtue of the TXOP comprises at least one of the following:
sending, by the first STA, the at least one radio frame to the plurality of second STAs after at least one specific inter-frame space after at least one system message frame is sent; and,
sending, by the first STA, the at least one radio frame to the plurality of second STAs on at least one pre-allocated resource used for sending the at least one radio frame.

16. A data acquisition method, comprising:
receiving, by a second Station (STA), at least one radio frame sent by a first STA, wherein the at least one radio frame comprises aggregated Protocol Data Units (PDUs) encapsulated with data, and the PDUs comprise at least one of Media Access Control (MAC) PDUs (MPDUs) and Physical (PHY) PDUs (PPDUs);
determining, by the second STA, whether the at least one radio frame carries data required to be acquired by the second STA or not; and
acquiring, by the second STA, the data in the at least one radio frame under the condition that the at least one radio frame carries data required to be acquired by the second STA.

17. The method as claimed in claim 16, wherein determining, by the second STA, whether the radio frame carries the data required to be acquired by the second STA or not comprises:
judging, by the second STA, whether the radio frame carries identification information or address information of the second STA or not according to at least one of the following information: identification information encapsulated in at least one PHY signaling of each of the at least one radio frame and used for identifying STAs corresponding to the data, identification information encapsulated in the PDUs of the at least one radio frame and used for identifying STAs corresponding to the data and address information, comprised in frame headers of the PDUs encapsulated with the data in the at least one radio frame, of the STAs required to acquire the data; and
determining, by the second STA, that the radio frame carries the data required to be acquired by the second STA under the condition that the radio frame carries identification information or address information of the second STA.

18. The method as claimed in claim 17, wherein determining, by the second STA, whether the at least one radio frame carries the identification information of the second STA or not according to the identification information encapsulated in the at least one PHY signaling of each of the at least one radio frame and used for identifying the STAs corresponding to the data comprises:
determining, by the second STA, whether the at least one radio frame carries the identification information of the second STA or not according to at least one of the following information carried in the identification information encapsulated in the at least one PHY signaling of each of the at least one radio frame:
identifier information of the second STA, group identification information of the second STA, data existence indication information of the second STA, position information of the data of the second STA, number information of the data of the second STA and address information corresponding to the second STA.

19. The method as claimed in claim 17, wherein determining, by the second STA, whether the radio frame carries the identification information of the second STA or not according to the identification information encapsulated in the PDUs of the at least one radio frame and used for identifying the STAs corresponding to the data comprises:
determining, by the second STA, whether the at least one radio frame carries the identification information of the second STA or not according to at least one of the following information carried in the identification information encapsulated in the PDUs of the at least one radio frame:
identifier information of the second STA, group identification information of the second STA, data existence indication information of the second STA, position information of the data of the second STA, number information of the data of the second STA and address information corresponding to the second STA.

20. The method as claimed in claim 17, wherein determining, by the second STA, whether the at least one radio frame carries the address information of the second STA or not according to the address information, comprised in the frame headers of the PDUs encapsulated with the data in the at least one radio frame, of the STAs required to acquire the data comprises:
sequentially decoding, by the second STA, the PDUs encapsulated with the data in the at least one radio frame;
determining, by the second STA, whether the frame headers of the PDUs encapsulated with the data carry the address information of the second STA or not; and
determining, by the second STA, that the at least one radio frame carries the address information of the second STA under the condition that the frame headers of the PDUs encapsulated with the data carry the address information of the second STA.

21. A data sending device, applied to a first Station (STA) and comprising:
a first encapsulation component, to encapsulate data required to be sent to a plurality of second STAs in different Protocol Data Units (PDUs) respectively, wherein PDUs comprise at least one of Media Access Control (MAC) PDUs (MPDUs) and Physical (PHY) PDUs (PPDUs);
a aggregation component, to aggregate the PDUs encapsulated with the data in at least one radio frame; and
a sending component, to send the at least one radio frame to the plurality of second STAs.

22. The device as claimed in claim 21, wherein further comprising:
a second encapsulation component, to encapsulate identification information corresponding to the data and used for identifying the plurality of second STAs in the at least one radio frame.

23. The device as claimed in claim 22, wherein further comprising at least one of the following manners:
a first encryption component, to encrypt the PDUs encapsulated with the data through a private key of each of the plurality of second STAs corresponding to the data; and,
a second encryption component, to encrypt at least one PDU encapsulated with the identification information through a group key.

24. The device as claimed in claim 21, wherein the sending component comprises:
an acquisition element, to acquire a Transmission Opportunity (TXOP) used for sending the at least one radio frame; and
a sending element, to send the at least one radio frame to the plurality of second STAs by virtue of the TXOP.

25. A data acquisition device, applied to a second Station (STA) and comprising:
a receiving component, to receive at least one radio frame sent by a first STA, wherein the at least one radio frame comprises aggregated Protocol Data Units (PDUs) encapsulated with data, and the PDUs comprise at least one of Media Access Control (MAC) PDUs (MPDUs) and Physical (PHY) PDUs (PPDUs);
a determination component, to determine whether the at least one radio frame carries data required to be acquired by the second STA or not; and
an acquisition component, to acquire the data in the radio frame under the condition that the data in the at least one radio frame under the condition that the at least one radio frame carries data required to be acquired by the second STA.

26. The device as claimed in claim 25, wherein the determination component comprises:
a judgment element, to judge whether the at least one radio frame carries identification information or address information of the second STA or not according to at least one of the following information: identification information encapsulated in at least one PHY signaling of each of the at least one radio frame and used for identifying STAs corresponding to the data, identification information encapsulated in the PDUs of the at least one radio frame and used for identifying STAs corresponding to the data and address information, comprised in frame headers of the PDUs encapsulated with the data in the at least one radio frame, of the STAs required to acquire the data; and
a determination element, to determine that the radio frame carries the data required to be acquired by the second STA under the condition that the radio frame carries identification information or address information of the second STA.
